# EUROPÄISCHE PATENTSCHRIFT

(11) **EP 1 922 170 B1**
(45) Veröffentlichungstag und Bekanntmachung des Hinweises auf die Patenterteilung: **22.04.2009**
(21) Anmeldenummer: 06776982.8
(22) Anmeldetag: 19.08.2006
(51) Int. Cl.: B23B 31/00, B23B 29/034

(54) **SCHNITTSTELLE**
INTERFACE ELEMENT
INTERFACE

(30) Priorität: 22.08.2005 DE 102005040587
(43) Veröffentlichungstag der Anmeldung: 21.05.2008
(73) Patentinhaber: MAPAL Fabrik für Präzisionswerkzeuge Dr. Kress KG, D-73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2006/008192
(87) Internationale Veröffentlichungsnummer: WO 2007/022930

(56) Entgegenhaltungen:
- EP-A- 1 413 374
- EP-A- 1 424 152
- EP-A1- 0 294 348
- EP-A1- 1 193 011
- WO-A-01/87525
- WO-A-94/19132
- WO-A-20/04067213
- WO-A2-02/064295
- DE-A1- 2 025 254
- DE-A1- 3 312 990
- DE-U1- 29 919 851
- GB-A- 1 255 494
- GB-A- 2 137 124
- US-A- 5 213 347

## Beschreibung

Die Erfindung betrifft eine Schnittstelle zwischen einem ersten Werkzeugelement und einem zweiten Werkzeugelement gemäß Oberbegriff des Anspruchs 1. Eine solche Schnittstelle ist in der WO 01/87525 A offenbart.

Mit dem Begriff Schnittstelle werden hier Verbindungsstellen zwischen Werkzeugelementen bezeichnet, wobei es sich bei den Werkzeugelementen um Teile handeln kann, die der Bearbeitung von Werkstückoberflächen dienen, oder aber um Adapter, Zwischenstücke und dergleichen. Mit dem Begriff Werkzeugelement wird hier auch eine Maschinenspindel bezeichnet, an der ein Werkzeugelement befestigbar ist.

Schnittstellen der hier angesprochenen Art sind bekannt. Sie dienen nach allem der Verbindung zweier Werkzeugelemente derart, dass ein Drehmoment über die Schnittstelle hinweg übertragen werden kann. Werkzeugkupplungen zur Verbindung eines Werkzeugkopfes und eines Werkzeughalters mit einer Verdrehsicherung sowie einer axialen Verspannung sind bekannt (DE 35 32 891 A1). Eine derartige Schnittstelle dient dazu, zwei Werkzeugteile miteinander so zu verbinden, dass ein Drehmoment übertragbar ist. Bei der Verbindung soll auch berücksichtigt werden, dass die Werkzeugelemente automatisch spannbar und handhabbar sind. Um die Übertragung eines Drehmomentes sicherzustellen, also eine Verdrehsicherung zu gewährleisten, wird vorgeschlagen, mindestens einen Mitnehmer vorzusehen. Es wird auch die Möglichkeit angesprochen, eine polygonale Verbindung zwischen den Werkzeugelementen, beispielsweise ein Vielzahnprofil, zu realisierten. Es hat sich herausgestellt, dass bei auf diese Weise realisierten Schnittstellen kein ausreichendes Drehmoment übertragbar ist und das die exakte Ausrichtung der der Schnittstelle zugeordneten Werkzeugelemente nicht gewährleistet werden kann.

Aufgabe der Erfindung ist es daher, eine Schnittstelle zwischen einem ersten und zweiten Werkzeugelement zu schaffen, die diese Nachteile nicht aufweist.

Zur Lösung dieser Aufgabe wird eine Schnittstelle zwischen einem ersten und zweiten Werkzeugelement vorgeschlagen, die die in Anspruch 1 genannten Merkmale aufweist. Die Schnittstelle ist so realisiert, dass an einem der Werkzeugelemente ein Vorsprung und an dem anderen eine Ausnehmung vorgesehen ist, die den Vorsprung aufnimmt. Die Schnittstelle zeichnet sich dadurch aus, dass die Ausnehmung eine Innenkontur aufweist, die für mehreckig und/oder sternförmig ausgebildete Vorsprünge ausgelegt ist. Ein wesentlicher Gesichtspunkt ist, dass die Innenkontur eine optimale Drehmomentübertragung gewährleistende gekrümmte Bereiche aufweist, wobei die der Schnittstelle zugeordneten Werkzeugelemente so ineinander greifen, dass sich keine Kerbstellen ergeben. Diese könnten die Schnittstelle beschädigen, überdies wäre die exakte Ausrichtung der einander zugeordneten Werkzeugteile erschwert. Besonders zeichnet sich die Schnittstelle dadurch aus, dass die gekrümmten Bereiche der Innenkontur der Ausnehmung so ausgebildet sind, dass verschieden ausgebildete Vorsprünge aufgenommen und exakt gehalten werden können. In die Ausnehmung können also mehreckig oder sternförmig ausgebildete Vorsprünge eingesteckt werden, was die Verwendbarkeit des mit der Ausnehmung versehenen Werkzeugelements wesentlich verbessert: Die Ausnehmung ist nicht nur für einen einzigen speziell ausgebildeten Vorsprung ausgelegt; es können vielmehr unterschiedlich ausgestaltete Vorsprünge in die Ausnehmung eingebracht und exakt gehalten werden.

Der erfindungsgemäße Schnittstelle zeichnet sich dadurch aus, dass die Ausnehmung eine Innerkontur zeigt, bei der in einem ersten Bereich aneinander angrenzende -von innen gesehen- konkav ausgebildete Abschnitte vorgesehen sind, und ein zweiter Bereich, der wenigstens einen konkaven ersten Abschnitt und mindestens einen angrenzenden konvexen zweiten Abschnitt aufweist. Durch die Kombination der Ausgestaltung dieser beiden Bereiche ist es möglich, in die Ausnehmung sowohl Vorsprünge einzustecken, die im Wesentlichen mehreckig ausgebildet sind, als auch Vorsprünge, die eine sternförmig ausgebildete Außenkontur aufweisen.

Im Folgenden wird unter einem "mehreckigen" Vorsprung ein Vorsprung mit einer Außenkontur angesprochen, die nur ebene Flächen aufweist, die unter verschiedenen Winkeln aneinander grenzen, sodass Kanten gebildet werden. Als mehreckig wird auch eine Außenkontur bezeichnet, bei der einige der Flächen konvex nach außen gewölbt sind und jeweils an ebene Flächen angrenzen. Überdies können ebene Flächen und konkave Flächen oder konvexe und konkave Flächen zur Realisierung der Außenkontur eines mehreckigen Vorsprungs gewählt werden.

Im Folgenden werden unter "sternförmig" ausgebildeten Vorsprüngen solche verstanden, die in einem Abstand zueinander liegende Vorsprünge aufweisen, deren Flanken eben oder gebogen sind. Diese können dabei konkav nach innen eingezogen oder konvex nach außen gewölbt sein. Das Ende eines sternförmigen Vorsprungs kann spitz sein, also durch zwei aneinander grenzende, einen spitzen Winkel einschließende Flächen gebildet werden, oder unter einem Radius verlaufen. Dabei kann der Radius der Flanken des Vorsprungs dem Radius des Endes dieses Vorsprungs entsprechen.

Weitere Ausgestaltungen ergeben sich aus den Unteransprüchen.

Die Erfindung wird im Folgenden anhand der Zeichnung näher erläutert. Es zeigen:
- Figur 1: eine Draufsicht auf ein erstes Ausführungsbeispiel eines ersten Werkzeugelements mit einer Ausnehmung;
- Figur 2: eine Draufsicht auf das erste Werkzeugelement gemäß Figur 1 mit der Kontur eines ersten Ausführungsbeispiels eines Vorsprungs eines zweiten Werkzeugelements;
- Figur 3: eine Draufsicht auf das erste Werkzeugelement gemäß Figur 1 mit der Kontur eines zweiten Ausführungsbeispiels eines Vorsprungs eines Werkzeugelements;
- Figur 4: eine Seitenansicht eines zweiten Werkzeugelements;
- Figur 5: eine Draufsicht auf den Vorsprung des zweiten Werkzugelements gemäß Figur 4; und
- Figur 6: eine Draufsicht auf ein zweites Ausführungsbeispiel eines ersten Werkzeugelements mit einer Ausnehmung.

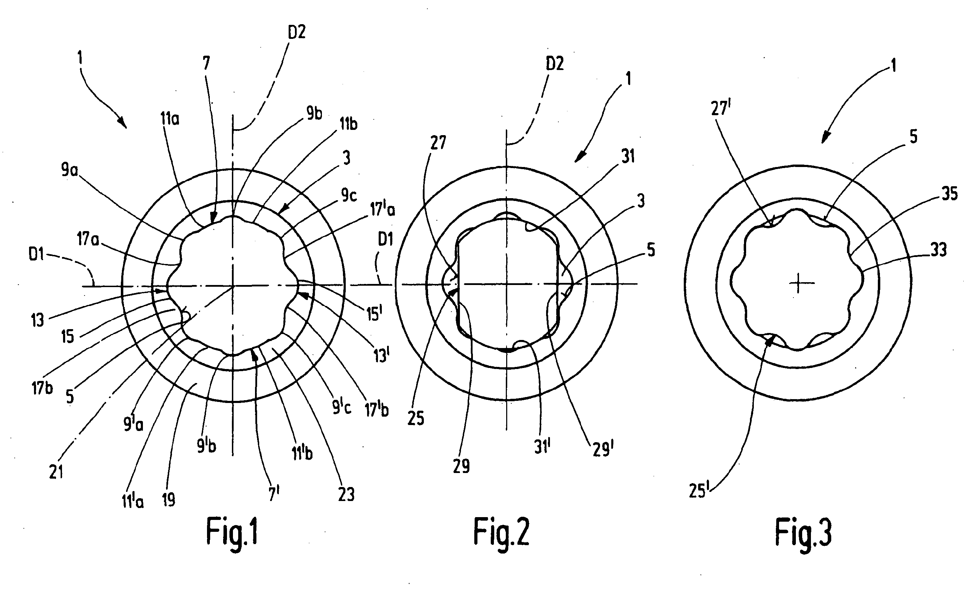

Figur 1 zeigt eine Draufsicht auf ein erstes Werkzeugelement 1 einer Schnittstelle mit einer Ausnehmung 3, die dazu dient, einen Vorsprung eines hier nicht dargestellten zweiten Werkzeugelements aufzunehmen und eine drehfeste Verbindung zwischen dem ersten Werkzeugelement 1 und dem zweiten Werkzeugelement zu realisieren.

Die Ausnehmung 3 erstreckt sich in die Bildebene von Figur 1 hinein und weist hier zwei Abschnitte auf, nämlich einen, der im wesentlichen zylindrisch ausgebildet ist, und einen, der eine konische Innenfläche aufweist, die sich - in Figur 1 - zum Betrachter hin erweitert. Zunächst wird auf den ersten Abschnitt näher eingegangen, der eine Innenkontur 5 aufweist.

Die Innenkontur 5 weist - in Umfangsrichtung gesehen - unterschiedlich ausgestaltete Bereiche auf, um mehreckige und/oder sternförmig ausgebildete Vorsprünge aufnehmen zu können. Oben in Figur 1 weist die Innenkontor 5 einen ersten Bereich 7 auf, der -von innen gesehen- erste konkave Abschnitte 9a, 9b und 9c sowie zweite konkave Abschnitte 11a und 11 b umfasst. Unterhalb einer horizontal verlaufenden Durchmesserlinie D1 findet sich ein symmetrisch zu dieser Durchmesserlinie ausgebildeter erster Bereich 7', der entsprechend konkav ausgebildete erste Abschnitte 9'a, 9'b und 9'c aufweist, zwischen denen konkav ausgebildete zweite Abschnitte 11'a und 11'b angeordnet sind.

Zwischen diesen ersten Bereichen 7 und 7' liegt zumindest ein zweiter Bereich 13, der wenigstens einen konkaven ersten Abschnitt 15 und mindestens einen angrenzenden konvexen zweiten Abschnitt aufweist. Bei dem hier dargestellten Ausführungsbeispiel ist der zweite Bereich 13 symmetrisch zur horizontalen Durchmesserlinie D1 ausgebildet, sodass sich beidseits an den -von innen gesehen- konkav ausgebildeten ersten Abschnitt 15 zwei konvex ausgebildete zweite Abschnitte 17a und 17b anschließen.

Symmetrisch zu einer vertikalen Durchmesserlinie D2, die senkrecht auf der ersten Durchmesserlinie D1 steht, ist ein zweiter Bereich 13' vorgesehen, der einen konkav ausgebildeten ersten Abschnitt 15' umfasst, an den sich hier beidseits konvex ausgebildete zweite Abschnitte 17'a und 17`b anschließen.

Bei dem in Figur 1 dargestellten Ausführungsbeispiel zeigt sich, dass die ersten Bereiche 7 und 7' symmetrisch zur vertikalen Durchmesserlinie D2 ausgebildet sind.

Die Draufsicht auf das dem Betrachter zugewandte Ende des ersten Werkzeugelements 1 zeigt, dass dessen Stirnfläche eine Planfläche 19 aufweist, die hier als durchgehende Ringfläche ausgebildet ist. Die Planfläche 19 liegt in einer gedachten Ebene, auf der die Mittelachse 21 des ersten Werkzeugelements 1 senkrecht steht. Wird das erste Werkzeugelement 1 mit einer Werkzeugmaschine verbunden, oder stellt das erste Werkzeugelement 1 eine Maschinenspindel dar, so bildet die Mittelachse 21 auch die Drehachse dieses Werkzeugelements.

Die Planfläche 19 umschließt hier einen sich nach innen verjüngenden Ausnehmungsbereich 23, der dem zweiten Abschnitt der Ausnehmung 3 zuzurechnen ist und der in die Bildebene von Figur 1 hineinverläuft. Er geht in den ersten zylindrischen Abschnitt der Ausnehmung 3 über.

Die im ersten Werkzeugelement 1 vorgesehene Ausnehmung 3 weist hier also zwei Abschnitte auf, nämlich einen zylindrischen Ausnehmungsbereich mit der Innenkontur 5, wie sie oben beschrieben wurde, sowie einen hier konisch sich in die Bildebene von Figur 1 hinein verjüngenden Ausnehmungsbereich 23. Es sei hier darauf hingewiesen, dass auch Schnittstellen realisierbar sind, bei denen der Ausnehmungsbereich 23 nicht eine kegelabschnittsmantelförmige Innenfläche aufweist, sondern zylindrisch ausgebildet ist.

Figur 2 zeigt das anhand von Figur 1 erläuterte erste Werkzeugelement 1 mit der die Innenkontur 5 und den Ausnehmungsbereich 23 umfassenden Ausnehmung 3. Aus Gründen der Vereinfachung wurde auf die Wiedergabe aller weiteren in Figur 1 eingetragenen Bezugsziffern verzichtet. Da Figur 2 die identische Stirnseitenansicht des ersten Werkzeugelements zeigt, wird auf die Erläuterungen zu Figur 1 verwiesen.

Der einzige Unterschied der Darstellung gemäß Figur 2 gegenüber Figur 1 ist der, dass in den zylindrischen Abschnitt der Ausnehmung 3 mit der oben beschriebenen Innenkontur 5 die Kontur eines ersten Ausführungsbeispiels eines Vorsprungs 25 eingezeichnet ist, dessen Außenkontur 27 im Sinne der oben wiedergegebenen Definition mehreckig ausgebildet ist. Das hier dargestellte Ausführungsbeispiel des Vorsprungs 25 weist eine Außenkontur 27 mit zwei parallelen ersten Abschnitten 29 und 29' auf, die in einem Abstand zur vertikalen Durchmesserlinie D2 symmetrisch angeordnet sind und an zwei symmetrisch zur horizontalen Durchmesserlinie D1 ausgebildete konvexe zweite Abschnitte 31, 31' der Außenkontur 27 angrenzen. Die zweiten Abschnitte 31, 31' bilden Zylinder-Teilflächen, deren Krümmungsradius praktisch dem Krümmungsradius der zweiten Abschnitte 11a, 11b und 11'a, 11'b der ersten Bereiche 7, 7' der Innenkontur 5 entspricht. Der Abstand dieser zweiten Abschnitte 31, 31' der Außenkontur 27 zur horizontalen Durchmesserlinie D1 ist so gewählt, dass die Außenkontur 27 des Vorsprungs 25 im Bereich der konvexen Abschnitte 31, 31' an den konkaven Abschnitten 11a, 11b und 11'a, 11'b der Innenkontur 5 anliegen.

Die Breite des Vorsprungs 25 ist im Bereich der parallel zueinander verlaufenden ersten Abschnitte 29, 29' so gewählt, dass diese praktisch an den konvexen zweiten Abschnitten 17a, 17b und 17'a, 17'b der zweiten Bereiche 13, 13' der Innenkontur 5 anliegen.

Aus Figur 2 wird deutlich, dass der Vorsprung 25 sich oben und unten sicher an der Innenkontur 5 des zylindrischen Ausnehmungsbereichs abstützt, und dass auch dessen planparallelen zweiten Abschnitte 29, 29' sicher im zweiten Bereich 13, 13' der Innenkontur 5 gestützt werden, nämlich von deren konkaven zweiten Abschnitten 17a, 17b und 17'a, 17'b.

Die speziell ausgebildete Innenkontur 5 des zylindrischen Ausnehmungsbereiches im ersten Werkzeugelement 1 nimmt also zumindest Bereiche des Vorsprungs 25 mit geringem Spiel auf, wobei ein hohes Drehmoment übertragbar ist.

Der in Figur 2 angedeutete Vorsprung weist eine bekannte Gestaltung auf.

Figur 2 zeigt letztlich nur einen zylindrischen Vorsprungsbereich des Vorsprungs 25, der im zylindrischen Ausnehmungsbereich des Werkzeugelements im Bereich der Innenkontur 5 zu liegen kommt. In Figur 2 ist nicht dargestellt, dass der Vorsprung 25 auch einen sich konisch zum Betrachter hin erweiternden Vorsprungsbereich aufweist, dessen kegelabschnittsmantelförmig ausgebildete Außenwand sich an die Innenwand des konischen Ausnehmungsbereichs 23 der Ausnehmung 3 des Werkzeugelements 1 anlegt.

Figur 3 zeigt eine Draufsicht auf das erste Werkzeugelement 1, das im Einzelnen in Figur 1 erläutert wurde. Daher werden die in Figur 1 wiedergegebenen Bezugsziffern in Figur 3 nicht wiederholt und auf die Beschreibung zu Figur 1 verwiesen. In den zylindrischen Ausnehmungsbereich mit der Innenkontur 5 ist hier die Außenkontur 27' eines sternförmig ausgebildeten Vorsprungs 25' eingezeichnet, die gleichmäßig ausgebildete, in Umfangsrichtung in gleichem Abstand zueinander angeordnete konvexe Vorsprünge 33 zeigt, zwischen denen konkave Vertiefungen 35 liegen. Die Vorsprünge 33 und Vertiefungen 35 weisen hier gleiche Krümmungsradien auf, wobei die Vorsprünge 33 und die Vertiefungen 35 zu einer gedachten Mittelebene symmetrisch aufgebaut sind.

Die Vorsprünge weisen konvexe, also nach außen gewölbte, Flanken und ein konvexes Ende auf. Die Flanken und das Ende haben den gleichen Krümmungsradius.

Aus Figur 3 ist ersichtlich, dass die Außenkontur 27' des Vorsprungs 25' flächig an den zweiten Bereichen 13 und13' der Innenkontur 5 anliegen, außerdem in Bereichen der ersten Abschnitte 9a, 9b, 9c und 9'a, 9'b und 9'c der ersten Bereiche 7 und 7'.

Die Außenkontur 27' des Vorsprungs 25 liegt lediglich in den zweiten Abschnitten 11a, 11b und 11'a, 11'b der ersten Bereiche 7 und 7' nicht an der Innenkontur 5 der Ausnehmung 3 an.

Aufgrund der fast vollständigen flächigen Anlage der Außenkontur 27' des Vorsprungs 25' an der Innenkontur 5 der Ausnehmung 3 kann ein sehr hohes Drehmoment zwischen den beiden Werkzeugelementen der Schnittstelle übertragen werden.

Das erste Werkzeugelement 1, das in den Figuren 1 bis 3 dargestellt wurde, zeichnet sich nach allem dadurch aus, dass die Innenkontur 5 so ausgebildet ist, dass sowohl Vorsprünge 25 mit einer mehreckigen Außenkontur 27 als auch Vorsprünge 25' mit einer sternförmigen Außenkontur 27' in die Ausnehmung 3 eingesteckt werden können und zumindest bereichsweise flächig an der Innenkontur 5 anliegen, sodass ein hohes Drehmoment übertragbar ist. Deutlich wird auch, dass bei dem Ausführungsbeispiel des Vorsprungs 25' ein höheres Drehmoment übertragen werden kann, als dies bei dem mehreckigen Vorsprung 25 gemäß Figur 2 der Fall ist.

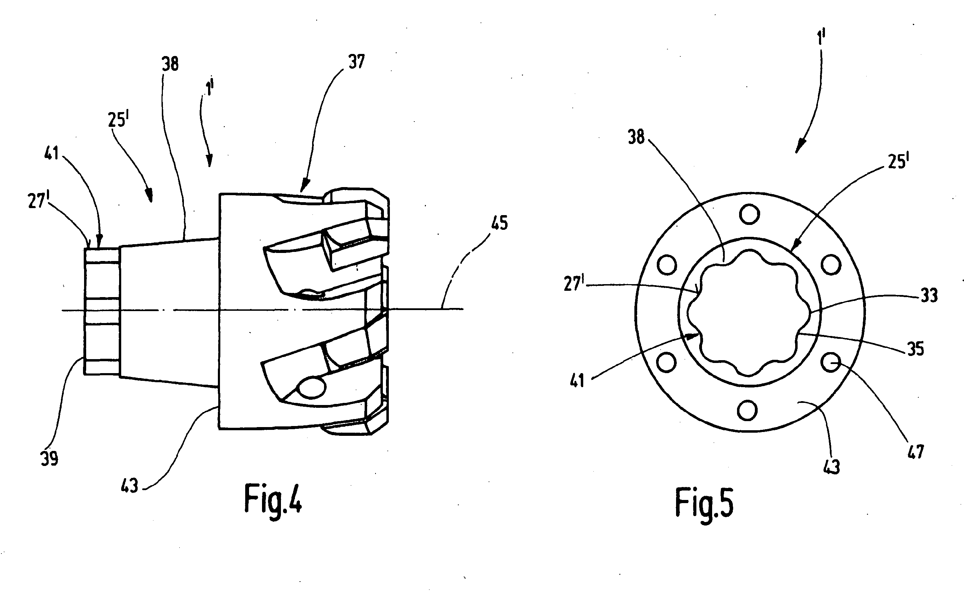

Figur 4 zeigt eine Seitenansicht eines zweiten Werkzeugelements 1'. Für die Realisierung einer Schnittstelle ist es belanglos, wie das zweite Werkzeugelement ausgebildet ist. Es kann sich hier um ein Zwischenstück, einen Adapter oder aber, wie hier dargestellt, um einen Werkzeugkopf 37 handeln, der mindestens eine, hier eine Anzahl von geometrisch definierten Schneiden aufweist, die hier Teil von Messerplatten sind. Da es für die Realisierung der Schnittstelle auf die Ausgestaltung des zweiten Werkzeugelements 1' nicht weiter ankommt, wird die genaue Ausgestaltung des Werkzeugkopfs 37 hier nicht näher erläutert. Wesentlich ist, dass der Werkzeugkopf 37 einen Vorsprung 25' aufweist. Dieser umfasst einen sich konisch verjüngenden Vorsprungsbereich 39 mit einer kegelabschnittsmantelförmigen Außenfläche, die so ausgebildet ist, dass sie sich an den kegelförmig ausgebildeten Ausnehmungsbereich 23 der Ausnehmung 3 des ersten Werkzeugelements 1 anlegt.

An seinem dem Werkzeugkopf 37 gegenüberliegenden Ende 39 weist der Vorsprung 25' einen zylindrischen Vorsprungsbereich 41 auf, dessen Außenkontur 27' sternförmig ausgebildet ist, wie dies anhand von Figur 3 bereits erläutert wurde.

Der größte Außendurchmesser des Vorsprungs 25' ist kleiner als der Außendurchmesser des Werkzeugkopfs 37. Es wird daher eine den Vorsprung 25' umgebende, hier ringförmige Planfläche 43 ausgebildet die in einer Ebene liegt, auf der die Mittelachse 45 des zweiten Werkzeugelements 1 senkrecht steht.

In zusammengebautem Zustand der Schnittstelle befindet sich der zylindrische Vorsprungsbereich 41 mit seiner Außenkontur 27' in Eingriff mit dem zylindrischen Ausnehmungsbereich, der die Innenkontur 5 aufweist, wie sie anhand der Figuren 1 bis 3 erläutert wurde. Entsprechend liegt der konische Vorsprungsbereich 38 an dem konischen Ausnehmungsbereich 23 der Ausnehmung 3 des ersten Werkzeugelements 1 an. Schließlich liegt die Planfläche 19 des ersten Werkzeugelements 1 an der Planfläche und 43 des zweiten Werkzeugelements 1' aneinander an, sodass die Werkzeugelemente 1, 1' der Schnittstelle exakt zueinander ausgerichtet sind.

Figur 5 zeigt eine Draufsicht auf den Vorsprung 25' des zweiten Werkzeugelements 1' gemäß Figur 4. Gleiche Teile sind mit gleichen Bezugsziffern versehen, sodass insofern auf die Beschreibung zu Figur 4 und zu Figur 3 verwiesen wird, wo bereits die Außenkontur 27' eines Vorsprungs 25' erläutert wurde.

Deutlich erkennbar ist, dass bei dem Ausführungsbeispiel gemäß Figur 5 in der Planfläche 43 eine Anzahl von Kühl-/Schmiermittelkanälen 47 münden. Entsprechend sind dann in der Planfläche 19 des ersten Werkzeugelements 1 derartige, in den Figuren 1 bis 3 aus Vereinfachungsgründen nicht dargestellte, Kühl-/Schmiermittelkanäle vorgesehen, falls eine Schmierung der aktiven Schneiden des Werkzeugkopfs 37 gewünscht ist.

Figur 5 zeigt den konischen Vorsprungsbereich 38 und den zylindrischen Vorsprungsbereich 41 des Vorsprungs 25', der eine Anzahl von gleichmäßig in Umfangsrichtung verteilten Vorsprüngen 33 aufweist, zwischen denen konkave Vertiefungen 35 liegen. Auf die Ausgestaltungsmöglichkeiten von Vorsprüngen 33 und Vertiefungen 35 wurde oben bereits anhand von Figur 3 ausführlich eingegangen, sodass hier auf Wiederholungen verzichtet wird.

Es wird deutlich, dass der Vorsprung 25' des zweiten Werkzeugelements 1' ohne Weiteres in die Ausnehmung 3 des ersten Werkzeugelements 1 passt und dort -außer an den zweiten Abschnitten 11a, 11 b, 11'a, 11'b- flächig an der Innenkontur 5 der Ausnehmung 3 anliegt, weil seine Außenkontur 27' weitgehend komplementär ausgebildet ist zur Innenkontur 5 der Ausnehmung 3. Damit ist ein maximales Drehmoment zwischen den beiden einer Schnittstelle zugeordneten Werkzeugelementen 1, 1' übertragbar. Oben wurde festgehalten, dass die Innenkontur 5 auch sternförmig ausgebildet sein kann. In diesem Fall liegt der Vorsprung 25' vollflächig an der Innenkontur 5 der Ausnehmung 3 an.

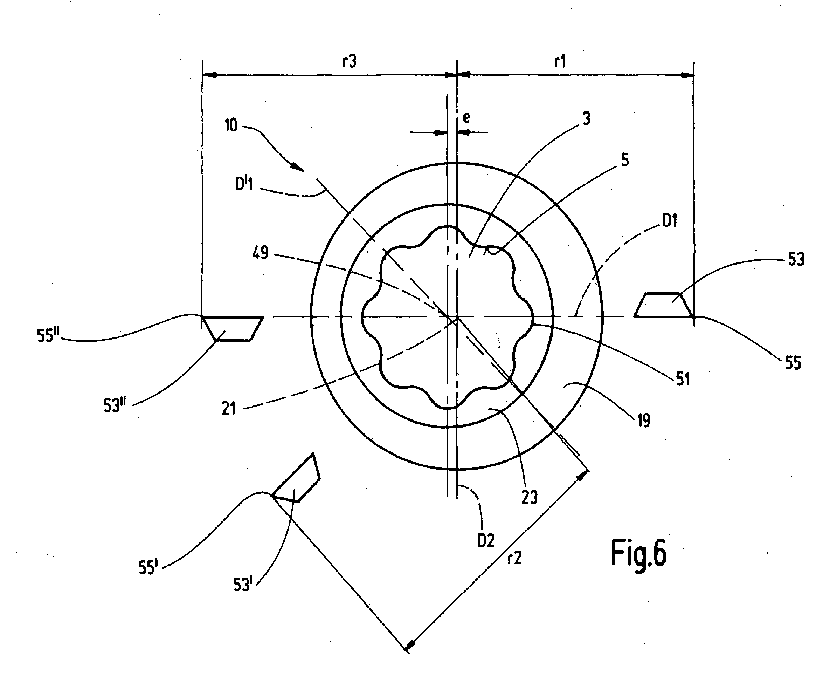

Figur 6 zeigt eine Draufsicht auf ein zweites Ausführungsbeispiel eines ersten Werkzeugelements 10. Gleiche und funktionsgleiche Teile sind mit gleichen Bezugsziffern versehen, sodass insofern auf die vorangegangene Beschreibung verwiesen wird.

Das erste Werkzeugelement 10 weist eine Ausnehmung 3 auf, die mit einer sternförmigen Innenkontur 5 versehen ist.

Der entscheidende Unterschied zu dem ersten Werkzeugelement 1 gemäß den Figuren 1 bis 3 liegt darin, dass die Ausnehmung 3 exzentrisch angeordnet ist. Der Mittelpunkt 49 der Ausnehmung 3 ist hier in einem Abstand e links von der vertikalen Durchmesserlinie D2 angeordnet, er liegt aber, wie die Mittelachse 21 des ersten Werkzeugelements 1, auf der horizontalen Durchmesserlinie D1.

Auch bei dem Ausführungsbeispiel gemäß Figur 6 kann die Ausnehmung 3 einen zylindrischen Ausnehmungsbereich mit der Innenkontur 5 und einen konischen Ausnehmungsbereich 23 umfassen, der sich zum Betrachter von Figur 6 erweitert und von einer Planfläche 19 umgeben ist. Diese liegt in einer gedachten Ebene, auf der die Mittelachse 21 des ersten Werkzeugelements 10 senkrecht steht. Da die Ausnehmung 3 exzentrisch angeordnet ist, ist die Breite der Planfläche 19 -anders als bei dem Ausführungsbeispiel gemäß den Figuren 1 bis 3- nicht konstant.

In der Planfläche 19 können Kühl-/Schmiermittelkanäle münden, wie dies anhand der Planfläche 43 des zweiten Werkzeugelements 1' anhand von Figur 5 erläutert wurde.

Ein mit dem ersten Werkzeugelement 10 zusammenwirkendes, hier nicht dargestelltes zweites Werkzeugelement 1' ist vorzugsweise so ausgebildet, dass dessen Vorsprung 25' zentrisch zu der Mittelachse 45 des zweiten Werkzeugelements 1' angeordnet ist.

Aufgrund der exzentrischen Anordnung der Ausnehmung 3 im ersten Werkzeugelement 10 ergibt sich folgender Effekt: Das zweite Werkzeugelement 1' kann so in die Ausnehmung 3 eingesteckt werden, dass die horizontale Durchmesserlinie des eingesteckten zweiten Werkzeugelements 1' gleich ausgerichtet ist wie die in Figur 6 dargestellte horizontale Durchmesserlinie D1 des ersten Werkzeugelements 10. Angesichts der sternförmigen Ausbildung der Ausnehmung 3 kann das zweite Werkzeugelement 1' aber auch um einen Drehwinkel verdreht und dann in die Ausnehmung 3 eingesteckt werden, die in Figur 6 dargestellt ist. In diesem Fall liegt die Durchmesserlinie D1 des ersten Werkzeugelements 10 horizontal, während die Durchmesserlinie D'1 des eingesteckten zweiten Werkzeugelements 1' unter einem Winkel von 45° beispielsweise im Uhrzeigersinn verschwenkt angeordnet ist. Die Durchmesserlinie D'1 eines verdreht eingesetzten zweiten Werkzeugelements ist in Figur 6 eingezeichnet.

Dadurch, dass das zweite Werkzeugelement 1', das in das erste Werkzeugelement 10 gemäß Figur 6 eingesteckt wird, um einen Winkel zum Mittelpunkt 49 verschwenkt eingesetzt ist, und dadurch, dass die Ausnehmung 3 exzentrisch angeordnet ist, kann der Abstand einer an dem zweiten Werkzeugelement 1' vorgesehenen Schneide gegenüber der Mittelachse 21 des ersten Werkzeugelements 10 verändert werden. Es ist also möglich, bei einer exzentrischen Anordnung der Ausnehmung 3 unterschiedliche Bearbeitungsdurchmesser zu realisieren.

Aus Figur 6 wird deutlich, dass die Verschwenkung der Durchmesserlinie D'1 des zweiten Werkzeugelements 1', das in das erste Werkzeugelement 10 gemäß Figur 6 eingesteckt ist, um den Mittelpunkt 49 der exzentrischen Ausnehmung 3 im ersten Werkzeugelement 10 erfolgt.

Es wird deutlich, dass die Änderung des Bearbeitungsdurchmessers bei Verdrehung des zweiten Werkzeugelements gegenüber dem ersten Werkzeugelement 10 in Figur 6 davon abhängt, wie die Teilung der sternförmigen Innenkontur 5 der Ausnehmung 3 gewählt ist. Bei dem in Figur 6 dargestellten Ausführungsbeispiel weist die Innenkontur acht Vorsprünge 51 auf, in die die Vorsprünge des zweiten Werkzeugelements eingreifen können, die den Vorsprüngen 33 in Figur 5 entsprechen.

Es ist sehr wohl möglich, die Anzahl der Vorsprünge 51 der Innenkontur 5 wesentlich zu erhöhen, sodass bei einer Relativdrehung der beiden Werkzeugelemente zueinander kleinere Veränderungen der Relativposition realisierbar sind, als dies bei dem Ausführungsbeispiel gemäß Figur 6 der Fall ist.

In Figur 6 ist beispielhaft eine Messerplatte 53 mit einer Schneide 55 angedeutet, die am zweiten Werkzeugelement angebracht und auf der Durchmesserlinie D1 angeordnet ist. Die Schneide hat damit von der Mittelachse 21 des ersten Werkzeugelements 10 einen Abstand r1. Da sich das erste Werkzeugelement 10 um die Mittelachse 21 dreht, liegt die Schneide 55 auf einem Flugkreis mit dem Radius r1. Bei der Bearbeitung einer Bohrung mittels der Schneide 55 stellt sich also ein entsprechender Bearbeitungsdurchmesser ein.

Wird das zweite Werkzeugelement mit der Messerplatte 55 aus dem ersten Werkzeugelement 10 herausgenommen und gegen den Uhrzeigersinn verdreht wieder in das erste Werkzeugelement 10 eingesteckt, verändert sich der Abstand der Schneide 55 zur Drehachse 21. In Figur 6 ist eine um 135° im Uhrzeigersinn verdrehte Messerplatte 53' mit einer Schneide 55' eingezeichnet. Hier liegt aufgrund der Exzentrizität der Ausnehmung 3 die Schneide 55' in einem Abstand r2 zur Drehachse 21. Dabei ist r2 > r1.

Wird das zweite Werkzeugelement um 180° verdreht in das erste Werkzeugelement 10 eingesetzt, so liegt die Messerplatte 53" gegenüber der Messerplatte 53. Entsprechend ist die Schneide 55" gegenüber der Schneide 55 angeordnet. Dabei liegt die Schneide 55'in einem Abstand r3 zur Durchmesserlinie D2. Es gilt hier, dass r3 größer ist als r2, außerdem größer ist als r1. Der Abstand r3 der Schneide 55" zur Durchmesserlinie D2 beträgt r1 + e.

Wird bei einer Exzentrizität e = 0,58 mm der Abstand der Schneide 55 in der ersten Position zur Durchmesserlinie D2 mit r1 = 14,51 mm gewählt, so beträgt der Abstand r3 in der gegenüberliegenden Position, in der Schneide 55" wiederum auf der Durchmesserlinie D1 liegt, r3 = 15,67 mm. Für den Abstand der Schneide 55' zur Drehachse 21 gilt: r2 = 15,52 mm.

Es zeigt sich also, dass aufgrund der exzentrischen Anordnung der Ausnehmung 3 im ersten Werkzeugelement 10 bei einer Drehung eines zweiten Werkzeugelements, dessen Vorsprung 25 in die Ausnehmung 3 eingesteckt ist, der Abstand r1 einer Schneide 55 bei einer Drehung des zweiten Werkzeugelements um 180° auf r3 zunimmt.

In der ersten Position beträgt der Abstand einer Schneide also r1, in einer zweiten Position r2 und in einer dritten Position r3.

Bei einer kleineren Teilung der sternförmigen Ausnehmung r3 beziehungsweise der Vorsprünge am zweiten Werkzeugelement können kleinere Veränderungen der Relativposition zwischen den beiden Werkzeugteilen realisiert werden, damit auch kleinere Veränderungen des Abstands einer Schneide zur Mittelachse 21. Auch wird mit einer Änderung der Exzentrizität e die Änderung des Radius von r1 auf r3 beeinflusst.

Eine Änderung des Radius beziehungsweise des Durchmessers des Flugkreises einer Schneide kann einerseits gewünscht sein, wenn Bohrungen unterschiedlichen Durchmessers bearbeitet werden sollen, andererseits aber auch, wenn eine Schneide 55 durch Bearbeitung von Werkstücken abgenutzt ist.

Im übrigen ist festzuhalten, dass bei einer Relativdrehung bei Zusammenbau des ersten Werkzeugelements 10 und eines zweiten Werkzeugelements mit einer Schneide 53 auch dann eine Änderung des Abstands der Schneide zur Mittelachse 55 erreicht werden kann, wenn auch der Vorsprung 25 eines zweiten Werkzeugelements exzentrisch zu dessen Mittelachse 45 angeordnet ist. Es können also sowohl die Ausnehmung 3 als auch der Vorsprung 25 exzentrisch angeordnet werden.

Im übrigen sei auch noch darauf hingewiesen, dass es für eine Schnittstelle belanglos ist, ob eine Ausnehmung 3, wie üblich, an einer Werkzeugspindel vorgesehen und entsprechend ein Vorsprung an einem dort anzubringenden Werkzeugelement angeordnet ist, oder umgekehrt. Einerseits kann durch die spezielle Ausgestaltung der Ausnehmung 3 und des Vorsprungs 25 ein höheres Drehmoment übertragen werden, andererseits ist bei einer Ausgestaltung gemäß Figur 6 eine Änderung des Flugkreises einer Schneide des zweiten Werkzeugelements möglich.

Wird bei einer Schnittstelle der hier angesprochenen Art die Ausnehmung mit einem konischen Ausnehmungsbereich 23 und der Vorsprung 25 mit einem konischen Vorsprungsbereich 38 versehen, so wird das Hauptdrehmoment über diese konischen Bereiche übertragen. Spitzenmomente werden über den Formschluß zwischen der Ausnehmung 3 und dem Vorsprungsbereich 41, die die hier beschriebene Innenbeziehungsweise Außenkontur aufweisen, übertragen.

Bei der das erste Werkzeugelement 1 beziehungsweise 10 und das zweite Werkzeugelement 1' umfassenden Schnittstelle kann auch vorgesehen sein, dass die beiden Werkzeugelemente nur in einer definierten Drehstellung zueinander ineinander fügbar sind. Dies kann dadurch realisiert werden, dass die Teilung der Innenkontur der Ausnehmung 3 und die des Vorsprungs 25 beziehungsweise 25' ungleich ist. Bei entsprechender Auslegung kann dadurch gewährleistet werden, dass der Vorsprung nur in einer bestimmten Drehstellung in die Ausnehmung einsteckbar ist.

Denkbar ist es aber auch, im Berührungsbereich der beiden Werkzeugelemente einerseits einen Stift oder dergleichen an einem Werkzeugelement und andererseits eine Vertiefung an dem anderen Werkzeugelement vorzusehen. Dadurch ist sichergestellt, dass die beiden Werkzeugelemente nur dann zusammenfügbar sind, wenn der Stift in die Ausnehmung eingreift. Dies führt zu einer definierten Drehwinkelpositionierung der beiden Werkzeugelemente.

Eine derartige Ausrichtung der beiden Werkzeugelemente kann einerseits relevant werden, um in den Planflächen mündende Kühl-/Schmiermittelkanäle gegeneinander auszurichten, oder andererseits, um sicherzustellen, dass am ersten Werkzeugelement vorgesehene Schneiden in einer bestimmten Positionierung gegenüber am zweiten Werkzeugelement vorgesehenen Führungsleisten oder Schneiden angeordnet sind. Auch kann durch die bestimmte Ausrichtung der beiden Werkzeugelemente im Bereich der Schnittstelle gewährleistet werden, dass an der Umfangsfläche der Werkzeugelemente vorgesehene Span- und/oder Schmiemuten im zusammengesetzten Zustand der Schnittstelle miteinander fluchten.

Aus den Erläuterungen zu den Figuren 1 bis 6 wird deutlich, dass die Schnittstelle, im Bereich derer zwei Werkzeugelemente zusammengesteckt werden, einfach aufgebaut ist und die Übertragung eines hohen Drehmoments gewährleistet. Anhand der Figuren 1 bis 3 wurde deutlich, dass bei entsprechender Auslegung der Ausnehmung 3 ein mit einer derartigen Ausnehmung versehenes erstes Werkzeugelement 1 universell verwendbar ist, weil einerseits mehreckige, andererseits auch sternförmig ausgebildete Vorsprünge in diese Ausnehmung eingreifen können. Es ist also möglich, bestehende Werkzeugsysteme mit einem ersten Werkzeugelement 1 auszustatten, wie es anhand der Figuren 1 bis 3 erläutert wurde.

## Patentansprüche

1. Schnittstellen zwischen einem ersten Werkzeugelement (1:10) und einem zweiten Werkzeugelement (1') mit einem am ersten oder zweiten Werkzeugelement vorgesehenen Vorsprung (25,25') und mit einer am zweiten oder ersten Werkzeugelemente vorgesehenen, den Vorsprung aufnehmenden Ausnehmung (3), **dadurch gekennzeichnet, dass** die Ausnehmung (3) eine Innenkontur (5) aufweist, die für mehreckig und/oder sternförmig ausgebildete Vorsprünge ausgelegt ist, dass die Innenkontur (5) zwei erste Bereiche (7;7') aufweist, die konkave erste und zweite Abschnitte (9,9'; 11,11') umfassen, dass die ersten und zweiten Abschnitte (9,9';11,11') der beiden ersten Bereiche (7;7') verschiedene Krümmungsradien aufweisen, dass die Innenkontur (5) zwei zweite Bereiche (13;13') aufweist, die wenigstens einen konkaven ersten Abschnitt (15',15') und mindestens einen angrenzenden konvexen zweiten Abschnitt (17;17') umfassen, und dass die zwei ersten Bereiche (7;7') und die zwei zweiten Bereiche (13; 13') einander gegenüberliegen.

2. Schnittstelle nach einem der vorhergehenden Ansprüche, **dadurch gekennzeichnet, dass** die gegenüberliegenden ersten Bereiche (7;7') und die gegenüberliegenden zweiten Bereiche (13;13') jeweils identisch ausgebildet sind.

3. Schnittstelle nach einem der vorhergehenden Ansprüche, **dadurch gekennzeichnet, dass** die Innenkontur (5) der Ausnehmung (3) zu einer ersten Durchmesserlinie (D1) und zu einer senkrecht auf der ersten Durchmesserlinie verlaufenden zweiten Durchmesserlinie (D2) symmetrisch ist.

4. Schnittstelle nach einem der vorhergehenden Ansprüche, **dadurch gekennzeichnet, dass** die Ausnehmung im ersten Werkzeugelement (10) und/oder der Vorsprung des zweiten Werkzeugelements exzentrisch gegenüber der Mittelachse des ersten beziehungsweise zweiten Werkzeugelements (21 ;45) angeordnet sind/ist.

5. Schnittstelle nach einem der vorhergehenden Ansprüche, **dadurch gekennzeichnet, dass** der Vorsprung und die Ausnehmung jeweils einen kegelabschnittsmantelförmig ausgebildeten Bereich (38;23) aufweisen.

6. Schnittstelle nach einem der vorhergehenden Ansprüche, **dadurch gekennzeichnet, dass** der Vorsprung und die Ausnehmung jeweils mindestens einen zylindrischen Bereich aufweisen.

7. Schnittstelle nach Anspruch 6, **dadurch gekennzeichnet, dass** die Innenkontur (5) der Ausnehmung (3) im zylindrischen Ausnehmungsbereich der Ausnehmung vorgesehen ist.

8. Schnittstelle nach einem der vorhergehenden Ansprüche, **dadurch gekennzeichnet, dass** die Werkzeugelemente den Vorsprung beziehungsweise die Ausnehmung umgebende Planflächen (19;43) aufweisen.

9. Schnittstelle nach einem der vorhergehenden Ansprüche, **gekennzeichnet durch**, mindestens einen Kühl/Schmiermittelkanal (47).

10. Schnittstelle nach Anspruch 9, **dadurch gekennzeichnet, dass** der Kühl-/Schmiermittelkanal Teilkanäle aufweist, die in den Planflächen (19,43) münden.

11. Schnittstelle nach einem der vorhergehenden Ansprüche, **dadurch gekennzeichnet, dass** die Teilung der Innenkontur der Ausnehmung und die des Vorsprungs ungleich ist, um eine definierte Drehwinkelstellung der der Schnittstelle zugeordneten Werkzeugelemente zu gewährleisten.

12. Schnittstelle nach einem der Ansprüche 9 oder 10 **dadurch gekennzeichnet, dass** eine Ausrichteinrichtung vorgesehen ist, die ein zusammenfügen der Schnittstelle zweier zugeordneter Werkzeugelemente nur in einer definierten Drehstellung zulässt.

## Claims

1. Interface between a first tool element (1;10) and a second tool element (1') comprising a projection (25;25') on the first or second tool element and a cavity (3) on the second or first tool element, accommodating the projection, **characterized in that** the cavity (3) has an inner contour (5) being designed for polygonal and/or stellate projections, that the inner contour (5) comprises two first regions (7;7') having concave first and second sections (9,9'; 11,11'), that the first and second sections (9,9';11,11') of both first regions (7;7') comprise different curvature radiuses, that the inner contour (5) comprises two second regions (13;13'), having at least a concave first section (15;15') and at least an adjoining convex second section (17;17'), and that the two first regions (7,7') and the two second regions (13;13') are opposite of each other.

2. Interface according to one of the proceeding claims, **characterized in that** the opposite first regions (7;7') and the opposite second regions (13;13') being designed identically.

3. Interface according to one of the proceeding claims, **characterized in that** the inner contour (5) of the cavity (3) is symmetrical to a first diameter line (D1) and to a second diameter line (D2) running perpendicular on the first diameter line.

4. Interface according to one of the preceding claims, **characterized in that** the recess in the first tool element (10) and/or the projection of the second tool element is/are arranged eccentrically compared to the central axis of the first or second tool element (21;45).

5. Interface according to one of the preceding claims, **characterized in that** the projection and the cavity have a conic section-envelope-shaped region (38;23) each.

6. Interface according to one of the preceding claims, **characterized in that** the projection and the recess each comprise at least one cylindrical region.

7. Interface according to claim 6, **characterized in that** the inner contour (5) of the cavity (3) is provided within the cylindrical cavity region of the cavity.

8. Interface according to one of the proceeding claims, **characterized in that** the tool elements comprise planar surfaces (19;43) surrounding the projection or the cavity, respectively.

9. Interface according to one of the proceeding claims, **characterized by** at least one coolant/lubricant channel (47).

10. Interface according to claim 9, **characterized in that** the coolant-/lubricant channel comprises partial channels opening into the planar surfaces (19,43).

11. Interface according to one of the proceeding claims, **characterized in that** the separation of the inner contour of the cavity and of the projection is different, ensuring a defined rotary angle position of the tool elements assigned to the interface.

12. Interface according to one of the claims 9 or 10, **characterized in that** an alignment device is provided, enabling the connection of the interface of two assigned tool elements only in a defined rotary position.

## Revendications

1. Interface entre un premier élément d'outil (1 ; 10) et un second élément d'outil (1') avec une saillie (25 ; 25') prévue sur le premier ou second élément d'outil et avec un évidement (3) recevant la saillie, prévu sur le second ou premier élément d'outil, **caractérisée en ce que** l'évidement (3) présente un contour interne (5) qui est conçu pour des saillies polygonales et/ou en forme d'étoile, que le contour interne (5) présente deux premières zones (7 ; 7') qui comprennent des premières et secondes sections concaves (9, 9' ; 11, 11'), que les premières et secondes sections (9, 9' ; 11, 11') des deux premières zones (7 ; 7') présentent différents rayons de courbure, que le contour interne (5) présente deux secondes zones (13 ; 13') qui comprennent au moins une première section concave (15 ; 15') et au moins une seconde section convexe adjacente (17 ; 17') et que les deux premières zones (7 ; 7') et les deux secondes zones (13 ; 13') se font face.

2. Interface selon l'une quelconque des revendications précédentes, **caractérisée en ce que** les premières zones opposées (7 ; 7') et les secondes zones opposées (13 ; 13') sont de réalisation respectivement identique.

3. Interface selon l'une quelconque des revendications précédentes, **caractérisée en ce que** le contour interne (5) de l'évidement (3) est symétrique à une première ligne de diamètre (D1) et à une seconde ligne de diamètre (D2) s'étendant perpendiculairement à la première ligne de diamètre.

4. Interface selon l'une quelconque des revendications précédentes, **caractérisée en ce que** l'évidement est disposé dans le premier élément d'outil (10) et/ou la saillie du second élément d'outil est disposée de manière excentrique par rapport à l'axe médian du premier ou second élément d'outil (21 ; 45).

5. Interface selon l'une quelconque des revendications précédentes, **caractérisée en ce que** la saillie et l'évidement présentent chacun une zone réalisée en forme d'enveloppe de section conique (38 ; 23).

6. Interface selon l'une quelconque des revendications précédentes, **caractérisée en ce que** la saillie et l'évidement présentent chacun au moins une zone cylindrique.

7. Interface selon la revendication 6, **caractérisée en ce que** le contour interne (5) de l'évidement (3) est prévu dans la zone cylindrique de l'évidement.

8. Interface selon l'une quelconque des revendications précédentes, **caractérisée en ce que** les éléments d'outil présentent des surfaces planes (19 ; 43) entourant la saillie ou l'évidement.

9. Interface selon l'une quelconque des revendications précédentes, **caractérisée par** au moins un canal de produit réfrigérant/lubrifiant (47).

10. Interface selon la revendication 9, **caractérisée en ce que** le canal de produit réfrigérant/lubrifiant présente des canaux partiels qui débouchent dans les surfaces planes (19, 43).

11. Interface selon l'une quelconque des revendications précédentes, **caractérisée en ce que** la division du contour interne de l'évidement et celle de la saillie sont différentes afin de garantir une position d'angle de rotation définie des éléments d'outil associés à l'interface.

12. Interface selon l'une quelconque des revendications 9 ou 10, **caractérisée en ce qu'**un dispositif d'orientation qui autorise un assemblage de l'interface de deux éléments d'outil associés uniquement dans une position de rotation définie, est prévu.
